(19) **Europäisches Patentamt / European Patent Office / Office européen des brevets**

(11) **EP 2 958 111 B1**

(12) **EUROPEAN PATENT SPECIFICATION**

(45) Date of publication and mention
of the grant of the patent:
**14.02.2018 Bulletin 2018/07**

(21) Application number: **13874998.1**

(22) Date of filing: **15.02.2013**

(51) Int Cl.:
*H01B 1/06* (2006.01)  *H01B 1/10* (2006.01)
*H01B 13/00* (2006.01)  *H01M 10/0562* (2010.01)
*H01M 10/0525* (2010.01)

(86) International application number:
**PCT/JP2013/053759**

(87) International publication number:
**WO 2014/125633 (21.08.2014 Gazette 2014/34)**

(54) **LITHIUM ION CONDUCTOR, METHOD FOR PRODUCING SAME, AND ALL-SOLID-STATE LITHIUM SECONDARY BATTERY**

LITHIUM-IONEN-LEITER, VERFAHREN ZUR HERSTELLUNG DAVON UND FESTKÖRPER-LITHIUMSEKUNDÄRBATTERIE

CONDUCTEUR D'IONS DE LITHIUM, PROCÉDÉ DE FABRICATION ASSOCIÉ, ET BATTERIE SECONDAIRE AU LITHIUM ENTIÈREMENT À L'ÉTAT SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.12.2015 Bulletin 2015/52**

(73) Proprietor: **FUJITSU LIMITED**
**Kawasaki-shi**
**Kanagawa 211-8588 (JP)**

(72) Inventors:
• **HOMMA, Kenji**
**Kawasaki-shi**
**Kanagawa 211-8588 (JP)**
• **WATANABE, Satoru**
**Kawasaki-shi**
**Kanagawa 211-8588 (JP)**

(74) Representative: **Ward, James Norman et al**
**Haseltine Lake LLP**
**Bürkleinstrasse 10**
**80538 München (DE)**

(56) References cited:
**WO-A1-2013/024537      JP-A- 2007 273 214**
**US-A1- 2004 005 504**

• **Kenji Homma ET AL: "Enlarged Lithium-Ions Migration Pathway by Substitution of B 3+ for P 5+ in Li 3 PS 4", , 8 October 2012 (2012-10-08), XP055219762, Retrieved from the Internet: URL:http://ma.ecsdl.org/content/MA2012-02/ 12/1192.full.pdf [retrieved on 2015-10-09]**
• **KENJI HONMA ET AL.: 'Li3PS4 no Hankinzoku Genso Chikan ni yoru Kesshoso to Lithium Ion Dodenritsu Henka' BATTERY SYMPOSIUM IN JAPAN YOSHISHU, THE COMMITTEE OF BATTERY TECHNOLOGY 17 October 2011, page 241, XP008176289**

**Description**

TECHNICAL FIELD

The present invention relates to a lithium ionic conductor, a fabrication method for a lithium ionic conductor and an all-solid lithium secondary battery.

BACKGROUND ART

A secondary battery that is safe and has high reliability under all global environment is demanded for an energy harvesting technology in which electricity generated from minute energy such as sunlight, vibration or the body temperature of a person or an animal is accumulated and utilized for a sensor or wireless transmission power.

It is concerned that, in liquid-based secondary batteries that are widely utilized at present, if the number of utilization cycles increases, then a positive electrode active material may degrade and the battery capacity may decrease or organic electrolyte in the battery may be ignited by battery short-circuiting caused by formation of dendrite.

Therefore, secondary batteries of the liquid-based electrolyte are poor in the reliability and the safety, for example, where it is intended to use the secondary batteries in an energy harvesting device whose utilization for 10 years or more is expected.

Therefore, attention is paid to an all-solid lithium secondary battery wherein all of constituent materials are solid materials. The all-solid lithium secondary battery has no possibility of liquid leakage or ignition and is superior also in a cycle characteristic.

For example, as a solid electrolyte used for the all-solid lithium secondary battery, for example, as a lithium ionic conductor, $Li_2S$-$B_2S_3$-based ($Li_3BS_3$), $Li_2S$-$P_2S_3$-based ($Li_7P_3S_{11}$, $Li_3PS_4$, $Li_8P_2S_6$ or the like), $Li_2S$-$B_2S_5$-X (LiI, $B_2S_3$, $Al_2S_3$, $GeS_2$) -based ($Li_{4-X}Ge_{1-X}P_XS_4$) and $Li_2S$-$B_2S_3$-LiI-based electrolytes and so forth are available. Also a solid electrolyte having Li and S and having an element such as P, B and O as occasion demands ($Li_7P_3S_{11}$, $Li_2S$, $Li_3PO_4$-$Li_2S$-$B_2S_3$ system, $80Li_2S$-$20P_2S_5$ or the like) is available.

CITATION LIST

PATENT LITERTURE

PTL 1: Japanese Laid-Open Patent Application No. 2003-022707

PTL 2: Japanese Laid-Open Patent Application No. 2003-068361

PTL 3: Japanese Laid-Open Patent Application No. 2009-193803

Non-Patent LITERTURE

NPL 1: Ryoji Kanno et al., "Lithium Ionic Conductor Thio-LISICON", Journal of The Electrochemical Society, 148(7), A742-A746 (2001)
NPL 2: M. Menetrier et al., "Ionic Conduction in B2S3-Li2S-LiI glasses", Solid State Ionics 53-56 (1992) 1208-1213
NPL 3: Kenji Homma et al., "Crystal Structure and phase transitions of the lithium ionic conductor Li3PS4", Solid State Ionics 182 (2011) 53-58
NPL 4: Kenji Homma et al., "Crystal structure of High-Temperature Phase of Lithium Ionic Conductor, Li3PS4", J. Phys. Soc. Jpn.79 (2010) Suppl. A, pp.90-93

"Enlarged Lithium-Ions Migration Pathway by Substitution of B3+ for P5+ in Li3PS4", Homma et al, XP055219762, discloses lithium ionic conductors for use in solid state batteries.

## SUMMARY OF INVENTION

### TECHNICAL PROBLEM

Incidentally, in order to improve an output characteristic (load characteristic) of an all-solid lithium secondary battery, the internal resistance of the secondary battery is reduced. The internal resistance of the all-solid lithium secondary battery much depends upon the ionic conduction of the solid electrolyte, namely, of the lithium ionic conductor. Therefore, in order to reduce the internal resistance of the all-solid lithium secondary battery to improve the output characteristic, the ionic conduction of the solid electrolyte, namely, of the lithium ionic conductor, is enhanced.

Particularly, the crystal structure of the solid electrolyte, namely, of the lithium ionic conductor, is one of factors by which the ionic conductivity is varied significantly.

Therefore, it is desired to implement a lithium ionic conductor having a crystal structure having a high ionic conductivity, namely, a solid electrolyte of an all-solid lithium secondary battery, improve the ionic conduction of the lithium ionic conductor, namely, of the solid electrolyte of the all-solid lithium secondary battery, and reduce the internal resistance of the all-solid lithium secondary battery improve the output characteristic of the all-solid lithium secondary battery.

### SOLUTION TO PROBLEM

The lithium ionic conductor includes lithium (Li), phosphorus (P), boron (B) and sulfur (S) as constituent elements and includes a crystal structure including a crystal lattice of a monoclinic system.

The lithium ionic conductor includes lithium (Li), phosphorus (P), boron (B) and sulfur (S) as constituent elements, and includes, in X-ray diffraction (CuK$\alpha_1$: $\lambda$ = 1.5405 Å), a diffraction peak at $2\theta$ = 18.83 $\pm$ 0.5 deg, 20.60 $\pm$ 0.5 deg, 28.52 $\pm$ 0.5 deg, 29.53 $\pm$ 0.5 deg, 34.09 $\pm$ 0.5 deg and 39.37 $\pm$ 0.5 deg.

The lithium ionic conductor includes a composition represented by $Li_{3+3/4x}B_xP_{1-3/4x}S_4$ (0.6 $\leq$ x $\leq$ 1.1).

The all-solid lithium secondary battery includes a positive electrode, a negative electrode, and a solid electrolyte that is provided between the positive electrode and the negative electrode, contains lithium (Li), phosphorus (P), boron (B) and sulfur (S) as constituent elements and has a crystal structure including a crystal lattice of a monoclinic system.

The all-solid lithium secondary battery includes a positive electrode, a negative electrode, and a solid electrolyte that is provided between the positive electrode and the negative electrode, contains lithium (Li), phosphorus (P), boron (B) and sulfur (S) as constituent elements and has, in X-ray diffraction (CuK$\alpha_1$: $\lambda$ = 1.5405 Å), a diffraction peak at $2\theta$ = 18.83 $\pm$ 0.5 deg, 20.60 $\pm$ 0.5 deg, 28.52 $\pm$ 0.5 deg, 29.53 $\pm$ 0.5 deg, 34.09 $\pm$ 0.5 deg and 39.37 $\pm$ 0.5 deg.

The all-solid lithium secondary battery including a positive electrode, a negative electrode, and a solid electrolyte provided between the positive electrode and the negative electrode and having a composition represented by $Li_{3+3/4x}B_xP_{1-3/4x}S_4$ (0.6 $\leq$ x $\leq$ 1.1).

The fabrication method for a lithium ionic conductor includes mixing lithium (Li), phosphorus (P), boron (B) and sulfur (S), melting the mixture by heating, and quenching the melted mixture to fabricate a solid electrolyte having a crystal structure including a crystal lattice of a monoclinic system.

The fabrication method for a lithium ionic conductor includes mixing lithium (Li), phosphorus (P), boron (B) and sulfur (S), melting the mixture by heating, and quenching the melted mixture to fabricate a solid electrolyte having, in X-ray diffraction (CuK$\alpha_1$: $\lambda$ = 1.5405 Å), a diffraction peak at $2\theta$ = 18.83 $\pm$ 0.5 deg, 20.60 $\pm$ 0.5 deg, 28.52 $\pm$ 0.5 deg, 29.53 $\pm$ 0.5 deg, 34.09 $\pm$ 0.5 deg and 39.37 $\pm$ 0.5 deg.

The fabrication method for a lithium ionic conductor includes mixing lithium (Li), phosphorus (P), boron (B) and sulfur (S), melting the mixture by heating, and quenching the melted mixture to fabricate a solid electrolyte having a composition represented by $Li_{3+3/4x}B_xP_{1-3/4x}S_4$ (0.6 $\leq$ x $\leq$ 1.33) .

### ADVANTAGEOUS EFFECTS OF INVENTION

Accordingly, with the lithium ionic conductor, fabrication method for the lithium ionic conductor and all-solid lithium secondary battery, there is an advantage that it is possible to implement a lithium ionic conductor having a crystal structure having a high ionic conductivity, namely, a solid electrolyte of the all-solid lithium secondary battery, improve the ionic conduction of the lithium ionic conductor, namely, of the solid electrolyte of the all-solid lithium secondary battery, and reduce the internal resistance of the all-solid lithium secondary battery to improve an output characteristic of the all-solid lithium secondary battery.

### BRIEF DESCRIPTION OF DRAWINGS

[FIG. 1] FIG. 1 is a schematic sectional view depicting a configuration of an all-solid lithium secondary battery according to a present embodiment.

[FIG. 2] FIG. 2 is a view depicting weighing values of raw materials where the lithium ionic conductors (solid electrolytes) of the examples and comparative examples are fabricated.

[FIG. 3] FIG. 3 is a view depicting diffraction diagrams obtained by powder X-ray diffraction measurement of the lithium ionic conductors (solid electrolytes) of the examples and comparative examples.

[FIG. 4] FIG. 4 is a view depicting diffraction diagrams obtained by powder X-ray diffraction measurement of the lithium ionic conductors (solid electrolytes) of the examples and comparative examples.

[FIG. 5] FIG. 5 is a view depicting a diffraction diagram obtained by synchrotron X-ray diffraction measurement of the lithium ionic conductor (solid electrolyte) of the example 4.

[FIG. 6] FIG. 6 is a view illustrating lattice constants of the lithium ionic conductors (solid electrolytes) of the present examples and comparative examples.

[FIG. 7] FIG. 7 is a view depicting spectrum data obtained by infrared spectrometry of the lithium ionic conductor (solid electrolyte) of the example 4.

[FIG. 8] FIG. 8 is a view illustrating a calculation method for an ionic conductivity of the lithium ionic conductors (solid electrolytes) of the examples and comparative examples.

[FIG. 9] FIG. 9 is a view depicting ionic conductivities of the lithium ionic conductors (solid electrolytes) of the examples and comparative examples.

[FIG. 10] FIGS. 10(A) and 10(B) are views illustrating a fabrication method for the all-solid lithium secondary batteries of the examples.

[FIG. 11] FIG. 11 is a view depicting a discharge curve of the all-solid lithium secondary battery of the example.

DESCRIPTION OF EMBODIMENTS

In the following, a lithium ionic conductor, a fabrication method for the lithium ionic conductor and an all-solid lithium secondary battery according to an embodiment of the present invention are described with reference to the drawings.

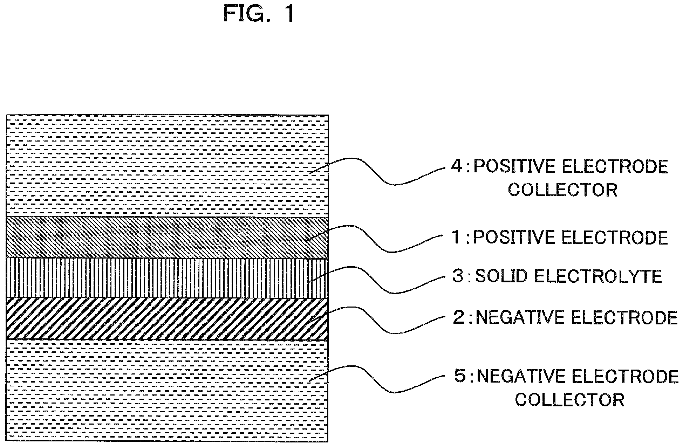

As depicted in FIG. 1, the all-solid lithium secondary battery according to the present embodiment includes a positive electrode 1, a negative electrode 2, a solid electrolyte 3 provided between the positive electrode 1 and the negative electrode 2, and a positive electrode collector 4 and a negative electrode collector 5 provided so as to sandwich the constituent elements 1, 2 and 3 therebetween. Preferably such an all-solid lithium secondary battery as just described is incorporated, for example, in an environment power generation apparatus.

Here, the positive electrode 1 includes a positive electrode active material. Here, the positive electrode 1 contains, for example, $LiCoO_2$ as the positive electrode active material. In particular, the positive electrode 1 is configured from a material obtained by mixing $LiCoO_2$ and a solid electrolyte material at a ratio of 6:4.

The negative electrode 2 includes a negative electrode active material. Here, the negative electrode 2 contains, for example, Li-Al as the negative electrode active material. In particular, the negative electrode 2 is configured from a material obtained by mixing Li-Al (alloy) and a solid electrolyte material at a ratio of 7:3.

The solid electrolyte 3 is a lithium ionic conductor and includes lithium (Li), phosphorus (P), boron (B) and sulfur (S) as constituent materials, and has a crystal structure that boron (B) is substituted for part of phosphorus (P) of $Li_3PS_4$.

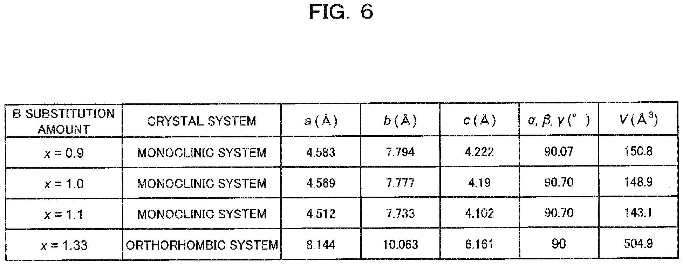

Particularly, the solid electrolyte 3 has a crystal structure including a crystal lattice of a monoclinic system. In particular, as described in the description of the examples (refer to FIG. 6) hereinafter described, the solid electrolyte (lithium ionic conductor) 3 has a crystal structure including a crystal lattice that satisfies a relationship of $a \neq b \neq c$ where a, b and c are lengths of the axes of a unit lattice and relationships of $\alpha$ and $\gamma = 90°$ and $\beta \neq 90°$ where $\alpha$, $\beta$ and $\gamma$ are angles between ridges . The solid electrolyte 3 is different from a solid electrolyte having a crystal structure including a crystal lattice of an orthorhombic system, namely, a solid electrolyte having a crystal structure including a crystal lattice that satisfies a relationship of $a \neq b \neq c$ where a, b and c are lengths of the axes of a unit lattice and another relationship of $\alpha$, $\beta$ and $\gamma = 90°$ where $\alpha$, $\beta$ and $\gamma$ are angles between ridges.

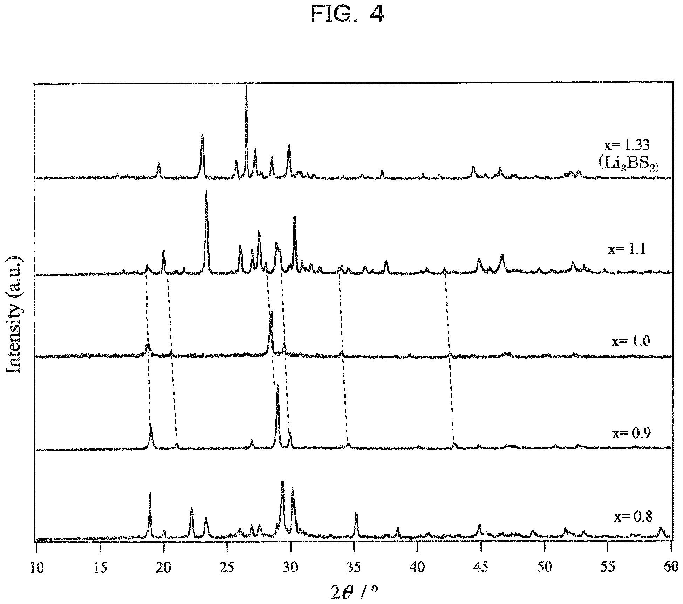

The solid electrolyte 3 having such a crystal structure including a crystal lattice of a monoclinic system as described above has a composition represented by $Li_{3+3/4x}B_xP_{1-3/4x}S_4$ ($0.9 \leq x \leq 1.1$) on the basis of powder X-ray diffraction data (refer to FIG. 4) in the examples hereinafter described.

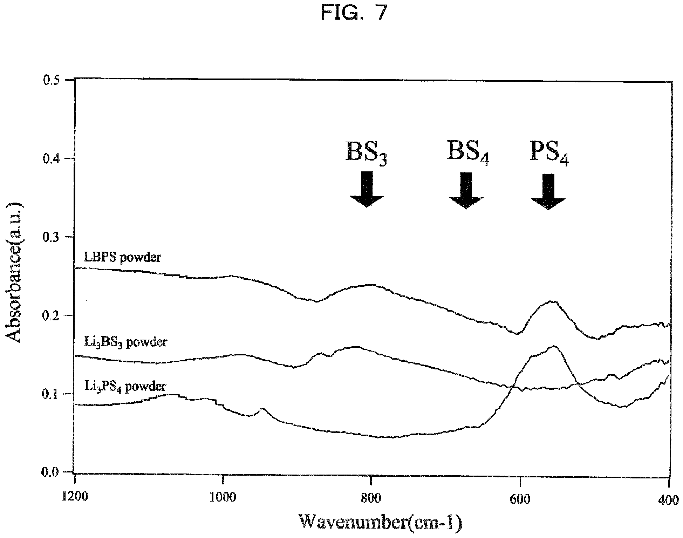

As indicated by a result of measurement (refer to FIG. 7) by infrared spectrometry in the examples hereinafter described, the solid electrolyte 3 having such a crystal structure including a crystal lattice of a monoclinic system as described above has a crystal structure including a skeleton of a three-coordinated planar body centering on boron (B) and a four-coordinated tetrahedron centering on boron (B) and another four-coordinated tetrahedron centering on phosphorus (P) . In particular, the solid electrolyte 3 has a crystal structure including a skeleton of a sulfate of $BS_3$, $BS_4$ and $PS_4$, namely, of polyanions. It is to be noted that the three-coordinated planar body centering on boron (B) is a $BS_3$ planar body and the four-coordinated tetrahedron centering on boron (B) is a $BS_4$ tetrahedron, and the four-coordinated tetrahedron centering on phosphorus (P) is a $PS_4$ tetrahedron.

Further, as indicated by power X-ray diffraction data (refer to FIG. 4) in the examples hereinafter described, the solid electrolyte 3 has, in an X-ray diffraction ($CuK\alpha_1$: $\lambda$ = 1.5405 Å), a diffraction peak at $2\theta$ = 18.83 $\pm$ 0.5 deg, 20.60 $\pm$ 0.5 deg, 28.52 $\pm$ 0.5 deg, 29.53 $\pm$ 0.5 deg, 34.09 $\pm$ 0.5 deg and 39.37 $\pm$ 0.5 deg.

Such a solid electrolyte 3 as described above can be fabricated by mixing lithium (Li), phosphorus (P), boron (B) and sulfur (S) and melting the mixture by heating and then quenching the melted mixture. In particular, the solid electrolyte 3 described above can be fabricated by quenching the mixture of lithium (Li), phosphorus (P), boron (B) and sulfur (S) from the temperature at which the mixture is melted to a room temperature. It is to be noted that such a synthesis method as just descried is referred to as quenching method, quenching synthesis method or quench method.

By such a solid electrolyte 3 as described above, the solid electrolyte 3 having a crystal structure having a high ionic conductivity can be implemented. Consequently, the ionic conduction of the solid electrolyte 3 can be improved.

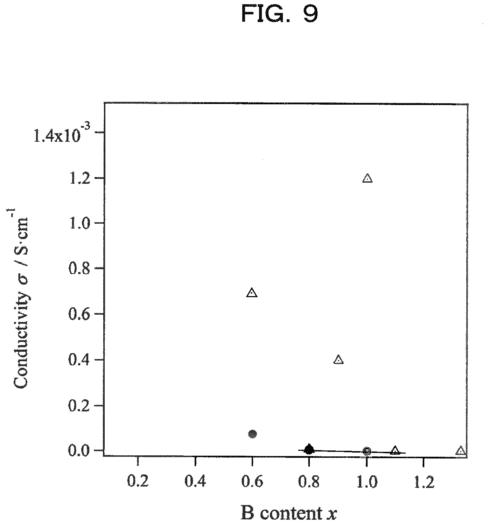

Particularly, as described in the description of the examples (refer to FIG. 9) hereinafter described, by configuring the solid electrolyte 3 so as to have a crystal structure including a crystal lattice of a monoclinic system and a composition represented by $Li_{3+3/4x}B_xP_{1-3/4x}S_4$ (x = 0.9), the solid electrolyte 3 having a high ionic conductivity exceeding $10^{-4}$ S/cm can be implemented. Further, by configuring the solid electrolyte 3 so as to have a crystal structure including a crystal lattice of a monoclinic system and a composition represented by $Li_{3+3/4x}B_xP_{1-3/4x}S_4$ (x = 1.0), the solid electrolyte 3 having a very high ionic conductivity exceeding $10^{-3}$ S/cm can be implemented. In particular, by configuring the solid electrolyte 3 so as to have a crystal structure including a crystal lattice of a monoclinic system and a composition represented by $Li_{3+3/4x}B_xP_{1-3/4x}S_4$ ($0.9 \le x \le 1.0$), the solid electrolyte 3 having at least a high ionic conductivity exceeding $10^{-4}$ S/cm can be implemented. In this manner, a remarkable effect can be obtained which cannot be obtained by a solid electrolyte wherein, for example, a solid electrolyte having a crystal structure including a crystal lattice of an orthorhombic system such as a $\beta$ structure or a $\gamma$ structure of $Li_3PS_4$, boron (B) is substituted for part of phosphorus (P) of a $\beta$ structure or a $\gamma$ structure of $Li_3PS_4$, or $Li_{3+3/4x}B_xP_{1-3/4x}S_4$ (x = 0.8) or $Li_{3+3/4x}B_xP_{1-3/4x}S_4$ (x = 1.33, namely, $Li_3BS_3$). It is to be noted that, while the solid electrolyte having a composition represented by $Li_{3+3/4x}B_xP_{1-3/4x}S_4$ (x = 1.1) is a solid electrolyte having a crystal structure including a crystal lattice of a monoclinic system as described above, since the amount of the crystal lattice of a monoclinic system is small, a remarkable effect similar to that obtained by the solid electrolyte having a composition represented by $Li_{3+3/4x}B_xP_{1-3/4x}S_4$ (x = 0.9) or by $Li_{3+3/4x}B_xP_{1-3/4x}S_4$ (x = 1.0) has not been obtained. Further, while the solid electrolyte having a composition represented by $Li_{3+3/4x}B_xP_{1-3/4x}S_4$ (x = 0.6) is a solid electrolyte having a crystal structure including a crystal lattice of an orthorhombic system, it is considered that the ionic conductivity is high arising from the $\beta$ structure by the synthesis by the quenching method as described above.

Further, since the constituent elements are lithium (Li), phosphorus (P), boron (B) and sulfur (S) and a rare and expensive semimetal element such as, for example, Ge is not used as described above, the production cost can be reduced and the solid electrolyte 3 can be implemented less expensively. Particularly, the present embodiment is effective to suppress the production cost of the all-solid lithium secondary battery where upsizing is taken into consideration.

Further, since boron (B) that is a lighter element than phosphorus (P) is substituted for phosphorus (P) as described above, reduction of the weight of the solid electrolyte 3 can be implemented. For example, it is a significant merit that the weight of a constituent material for a battery can be decreased where a large-size battery is incorporated in a moving body such as an electric automobile.

In this manner, with the solid electrolyte (lithium ionic conductor) 3 of the present embodiment, the solid electrolyte having a high ionic conductivity exceeding, for example, $10^{-3}$ S/cm can be implemented while the production cost is suppressed and reduction of the weight is achieved.

On the other hand, it has been reported that a solid electrolyte for which, for example, $Li_3PS_4$ is used as a basis and to which Ge is added indicates, for example, an ionic conduction (bulk impedance) of approximately $10^{-3}$ S/cm. However, since Ge is a rare and expensive semimetal element, this increases the production cost. Further, since Ge is a comparatively heavy element, this increases the weight.

Accordingly, with the lithium ionic conductor, fabrication method for the lithium ionic conductor and all-solid lithium secondary battery according to the present embodiment, there is an advantage that a lithium ionic conductor having a crystal structure having a high ionic conductivity, namely, the solid electrolyte 3 for the all-solid lithium secondary battery, can be implemented and the ionic conduction of the lithium ionic conductor, namely, of the solid electrolyte 3 for the all-solid lithium secondary battery, can be improved to reduce the internal resistance of the all-solid lithium secondary battery and improve the output characteristic of the all-solid lithium secondary battery.

It is to be noted that the present invention is not limited to the configuration of the embodiment specifically described above, and variations and modifications can be made without departing from the scope of the present invention.

For example, while, in the embodiment described above, the solid electrolyte (lithium ionic conductor) 3 having such a crystal structure as described above is configured so as to have a composition represented by $Li_{3+3/4x}B_xP_{1-3/4x}S_4$ ($0.9 \le x \le 1.1$) on the basis of the powder X-ray diffraction data (refer to FIG. 4) in the examples hereinafter described, the present invention is not limited to this.

In particular, where the solid electrolyte (lithium ionic conductor) 3 is fabricated by the fabrication method (quenching method) of the embodiment described above, if the solid electrolyte 3 is configured so as to have a composition represented by $Li_{3+3/4x}B_xP_{1-3/4x}S_4$ ($0.6 \leq x \leq 1.33$) on the basis of ionic conductivity data (refer to FIG. 9) of the examples hereinafter described, then the solid electrolyte 3 can be configured so as to have a high ionic conductivity in comparison with that of $Li_3PS_4$ or $Li_3BS_3$ fabricated by a different fabrication method. Consequently, the ionic conduction can be improved and the internal resistance of the all-solid lithium secondary battery can be reduced thereby to improve the output characteristic. In particular, if the solid electrolyte (lithium ionic conductor) 3 having a composition represented by $Li_{3+3/4x}B_xP_{1-3/4x}S_4$ ($0.6 \leq x \leq 1.33$) is fabricated by mixing lithium (Li), phosphorus (P), boron (B) and sulfur (S) and melting the mixture by heating and then quenching the melted mixture, then the solid electrolyte 3 has a high ionic conductivity in comparison with that of $Li_3PS_4$ or $Li_3BS_3$ fabricated by a different fabrication method. Consequently, the ionic conduction can be improved and the internal resistance of the all-solid lithium secondary battery can be reduced thereby to improve the output characteristic. It is to be noted that, while at least a solid electrolyte having a composition represented by $Li_{3+3/4x}B_xP_{1-3/4x}S_4$ ($0.9 \leq x \leq 1.1$) from among solid electrolytes having a composition represented by $Li_{3+3/4x}B_xP_{1-3/4x}S_4$ ($0.6 \leq x \leq 1.33$) has a crystal structure having a crystal lattice of a monoclinic system, for example, a solid electrolyte having a composition represented by $Li_{3+3/4x}B_xP_{1-3/4x}S_4$ ($x = 0.6$), $Li_{3+3/4x}B_xP_{1-3/4x}S_4$ ($x = 0.8$) or $Li_{3+3/4x}B_xP_{1-3/4x}S_4$ ($x = 1.33$) has a crystal structure that does not include a crystal lattice of a monoclinic system, namely, a crystal structure having a crystal lattice of an orthorhombic system.

Further, on the basis of the ionic conductivity data (refer to FIG. 9) of the example hereinafter described, if the solid electrolyte (lithium ionic conductor) 3 is configured so as to have a composition represented by $Li_{3+3/4x}B_xP_{1-3/4x}S_4$ ($0.6 \leq x \leq 1.1$) irrespective of the crystal structure and the fabrication method in the embodiment described above, then the solid electrolyte 3 has a high ionic conductivity in comparison with that of $Li_3PS_4$ or $Li_3BS_3$ . Consequently, the ionic conductioncanbe improved and the internal resistance of the all-solid lithium secondary battery can be reduced thereby to improve the output characteristic. For example, the solid electrolyte (lithium ionic conductor) 3 having a composition represented by $Li_{3+3/4x}B_xP_{1-3/4x}S_4$ ($0.6 \leq x \leq 1.1$) can be fabricated also in such a manner as described below. In particular, lithium (Li), phosphorus (P), boron (B) and sulfur (S) are mixed first and the mixture is melted by heating, and then the melted mixture is cooled to form a burned body. Then, the burned body is reduced to powder and burned at a temperature at which it does not melt thereby to fabricate the solid electrolyte (lithium ionic conductor) 3. The solid electrolyte (lithium ionic conductor) 3 fabricated in such a manner as just described has a crystal structure in which boron (B) is substituted for part of phosphorus (P) of the β structure of $Li_3PS_4$ at a room temperature. Therefore, the β structure having a high ionic conductivity at a room temperature is obtained and the solid electrolyte 3 has a high ionic conductivity in comparison with that of $Li_3PS_4$ or $Li_3BS_3$. Consequently, the ionic conduction can be improved and the internal resistance of the all-solid lithium secondary battery can be reduced thereby to improve the output characteristic. It is to be noted that, for details of this, International Publication PCT/JP2011/68618 is to be referred to.

It is to be noted that ionic conductivity data of solid electrolytes (lithium ionic conductors) having compositions represented by $Li_{3+3/4x}B_xP_{1-3/4x}S_4$ ($x = 0.9$) and $Li_{3+3/4x}B_xP_{1-3/4x}S_4$ ($x = 1.1$) synthesized by a natural cooling method are not plotted in the ionic conductivity data (refer to FIG. 9) of the examples hereinafter described. However, the ionic conductivity of a solid electrolyte (lithium ionic conductor) of the example 8, namely, of a solid electrolyte (lithium ionic conductor) having a composition represented by $Li_{3+3/4x}B_xP_{1-3/4x}S_4$ ($x = 0.8$) synthesized by a natural cooling method, is $8.8 \times 10^{-6}$ S/cm and the ionic conductivity of a solid electrolyte (lithium ionic conductor) of the example 9, namely, of a solid electrolyte (lithium ionic conductor) having a composition represented by $Li_{3+3/4x}B_xP_{1-3/4x}S_4$ ($x = 1.0$) synthesized by a natural coolingmethod, is $2.1 \times 10^{-6}$ S/cm. Thus, within this range, the ionic conductivity varies linearly and can be approximated by a linear line (refer to FIG. 9). Therefore, the ionic conductivities of the solid electrolytes (lithium ionic conductor) having the compositions represented by $Li_{3+3/4x}B_xP_{1-3/4x}S_4$ ($x = 0.9$) and $Li_{3+3/4x}B_xP_{1-3/4x}S_4$ ($x = 1.1$) synthesized by a natural cooling method are $5.0 \times 10^{-6}$ S/cm and $9.0 \times 10^{-7}$ S/cm, respectively. Accordingly, if the solid electrolyte (lithium ionic conductor) 3 is configured so as to have a composition represented by $Li_{3+3/4x}B_xP_{1-3/4x}S_4$ ($0.6 \leq x \leq 1.1$) irrespective of the crystal structure or the fabrication method as described hereinabove, then the solid electrolyte 3 can have a high ionic conductivity in comparison with that of $Li_3PS_4$ or $Li_3BS_3$. Consequently, the ionic conduction can be improved and the internal resistance of the all-solid lithium secondary battery can be reduced thereby to improve the output characteristic.

It is to be noted that, on the basis of the ionic conductivity data (refer to FIG. 9) of the examples hereinafter described, if a solid electrolyte is fabricated by the fabrication method (quenching method) of the embodiment described above or is configured so as to have a crystal structure including a crystal lattice of a monoclinic system of the embodiment described above, then, in a solid electrolyte having a composition represented by $Li_{3+3/4x}B_xP_{1-3/4x}S_4$ ($0.9 \leq x \leq 1.1$), a solid electrolyte having a high ionic conductivity exceeding at least $10^{-4}$ S/cm can be implemented and a remarkable effect can be obtained that the ionic conductivity increases remarkably. Further, if the fabrication method (quenching method) of the embodiment described above is used, then, where using any other fabrication method, a solid electrolyte having a composition represented by $Li_{3+3/4x}B_xP_{1-3/4x}S_4$ ($x = 1.33$) that does not obtain a desired crystal structure and that does not exhibit an ionic conduction comes to have a crystal structure including a crystal lattice of an orthorhombic system and having a high ionic conductivity. Further, if a solid electrolyte having a composition represented by $Li_{3+3/4x}B_xP_{1-3/4x}S_4$ (x = 0.6) is fabricated by the fabrication method (quenching method) of the embodiment described above, then it exhibits remarkable improvement in ionic conductivity in comparison with a solid electrolyte fabricated by a natural cooling method hereinafter described.

[Examples]

In the following, the present invention is described in more detail with reference to examples. However, the present invention is not limited to the examples described below.

[First Synthesis Method (Quenching Method) of Solid electrolyte (Lithium Ionic Conductor)]

First, lithium sulfide ($Li_2S$), phosphorus pentasulfide ($P_2S_5$), boron (B) and sulfur (S) were mixed using an agate mortar in a glove box to perform pallet molding.

Then, the mixture produced by the pellet molding was encapsulated under reduced pressure into a quartz tube having an inner face covered with glassy carbon and then heated at approximately 800°C, which is a temperature at which the mixture is melted, and kept at the temperature for approximately six hours. Then, the mixture was quenched to a room temperature thereby to obtain a solid electrolyte (lithium ionic conductor).

[Second Synthesis Method (Natural Cooling Method) of Solid electrolyte (Lithium Ionic Conductor)]

Lithium sulfide ($Li_2S$), phosphorus pentasulfide ($P_2S_2$), boron (B) and sulfur (S) were mixed first using an agate mortar in a glove box to perform pallet molding.

Then, the mixture produced by the pellet molding was encapsulated under reduced pressure into a quartz tube having an inner face covered with glassy carbon and then heated to approximately 700°C, which is a temperature at which the mixture is melted, and kept at the temperature for approximately four hours. Then, the mixture was naturally cooled to a room temperature to obtain a burned body (burned sample).

Then, the burned body obtained in such a manner as just described was reduced to powder for approximately 90 minutes using a vibrating cup mill, and the powder was molded by uniaxial press again. Then, the molded burned body was encapsulated under reduced pressure and then burned for approximately eight hours at approximately 550°C that is a temperature at which the burned body does not melt thereby to obtain a solid electrolyte (lithium ionic conductor).

[Example 1]

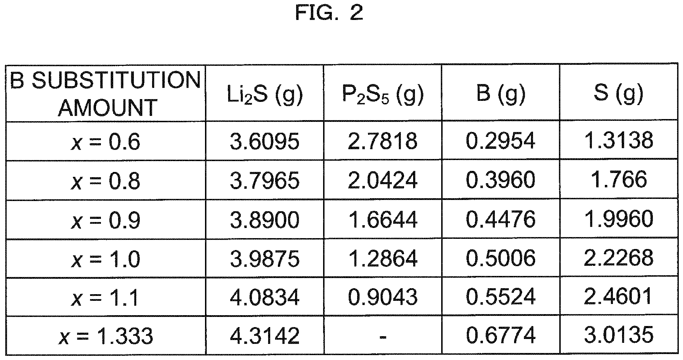

As depicted in FIG. 2, on the basis of a composition ratio in the case of x = 0.600 in a $Li_{3+3/4x}B_xP_{1-3/4x}S_4$ solid solution system, weighing values of lithium sulfide ($Li_2S$), phosphorus pentasulfide ($P_2S_5$), boron (B) and sulfur (S) were set to 3.6095 g, 2.7818 g, 0.2954 g and 1.3138 g, respectively. Then, the materials were mixed to obtain a solid electrolyte (lithium ionic conductor) by the first synthesis method (quenching method) described above.

[Example 2]

As depicted in FIG. 2, on the basis of a composition ratio in the case of x = 0.800 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 3.7965 g, 2.0424 g, 0.3960 g and 1.7660 g, respectively. Then, the materials were mixed to obtain a solid electrolyte (lithium ionic conductor) by the first synthesis method (quenching method) described above.

[Example 3]

As depicted in FIG. 2, on the basis of a composition ratio in the case of x = 0.900 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 3.8900, 1.6644 g, 0.4476 g and 1.9960 g, respectively. Then, the materials were mixed to obtain a solid electrolyte (lithium ionic conductor) by the first synthesis method (quenching method) described above.

[Example 4]

As depicted in FIG. 2, on the basis of a composition ratio in the case of x = 1.000 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 3.9875 g, 1.2864 g, 0.5006 g and 2.2268 g, respectively. Then, the materials were mixed to obtain a solid electrolyte (lithium ionic conductor) by the first synthesis method (quenching method) described above.

[Example 5]

As depicted in FIG. 2, on the basis of a composition ratio in the case of x = 1.100 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 4.0834 g, 0.9043 g, 0.5524 g and 2.4601 g, respectively. Then, the materials were mixed to obtain a solid electrolyte (lithium ionic conductor) by the first synthesis method (quenching method) described above.

[Example 6]

As depicted in FIG. 2, on the basis of a composition ratio in the case of x = 1.333 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 4.3142 g, 0 g, 0.6774 g and 3.0135 g, respectively. Then, the materials were mixed to obtain a solid electrolyte (lithium ionic conductor) by the first synthesis method (quenching method) described above.

[Example 7]

As depicted in FIG. 2, on the basis of a composition ratio in the case of x = 0.600 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 3.6095 g, 2.7818 g, 0.2954 g and 1.3138 g, respectively. Then, the materials were mixed to obtain a solid electrolyte (lithium ionic conductor) by the second synthesis method (natural cooling method) described above.

[Example 8]

As depicted in FIG. 2, on the basis of a composition ratio in the case of x = 0.800 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 3.7965 g, 2.0424 g, 0.3960 g and 1.7660 g, respectively. Then, the materials were mixed to obtain a solid electrolyte (lithium ionic conductor) by the second synthesis method (natural cooling method) described above.

[Example 9]

As depicted in FIG. 2, on the basis of a composition ratio in the case of x = 1.000 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were determined to 3.9875 g, 1.2864 g, 0.5006 g and 2.2268 g, respectively. Then, the materials were mixed to obtain a solid electrolyte (lithium ionic conductor) by the second synthesis method (natural cooling method) described above.

[Comparative Example 1]

As depicted in FIG. 2, on the basis of a composition ratio in the case of x = 1.333 in a $Li_{3+3/4x}B_xP_{1-3/4x}S_4$ solid solution system, weighing values of lithium sulfide ($Li_2S$), phosphorus pentasulfide ($P_2S_2$), boron (B) and sulfur (S) were set to 4.3142 g, 0 g, 0.6774 g and 3.0135 g, respectively. Then, the materials were mixed to obtain a solid electrolyte (lithium ionic conductor) by the second synthesis method (natural cooling method) described above.

[Comparative Example 2]

On the basis of a composition ratio where x is set lower than x = 0.100 in a $Li_{3+3/4x}B_xP_{1-3/4x}S_4$ solid solution system, lithium sulfide ($Li_2S$), phosphorus pentasulfide ($P_2S_2$), boron (B) and sulfur (S) were mixed to obtain a solid electrolyte (lithium ionic conductor) by the second synthesis method (natural cooling method) described above.

[Evaluation of Solid electrolyte (Lithium Ionic Conductor)]

First, powder X-ray diffraction measurement was performed to evaluate the crystal structure of the solid electrolytes (lithium ionic conductors) of the examples 1 to 9 and the comparative examples 1 and 2 obtained in such a manner as described above.
Here, as the powder X-ray diffraction measurement, laboratory X-ray diffraction measurement was performed for the solid electrolytes (lithium ionic conductors) of the examples 1 to 9 and the comparative examples 1 and 2. Further, and synchrotron X-ray diffraction measurement was performed for the solid electrolyte (lithium ionic conductor) of the example 4, and infrared spectrometry was performed for the solid electrolyte (lithium ionic conductor) of the example 4.

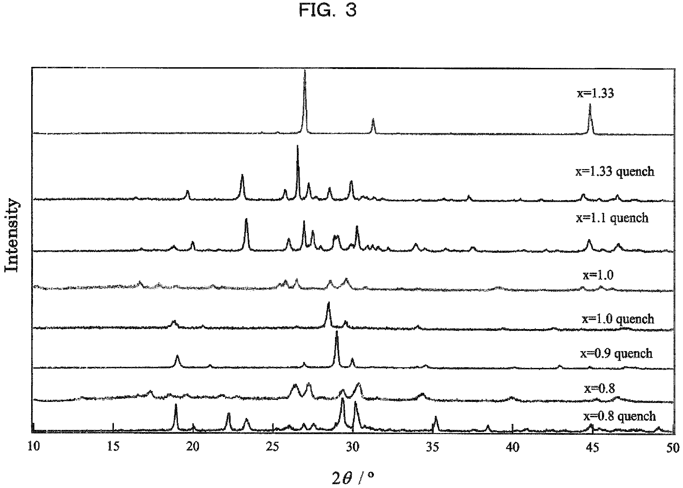

First, in the laboratory X-ray diffraction measurement, the RINT [output voltage (tube voltage) 40 kv, output current (tube current) 30 mA] of Rigaku Corporation was used as the apparatus. Further, using $CuK\alpha$ ($CuK\alpha_1$: $\lambda$ = 1.5405 Å), the measurement range was set to $10° \leq 2\theta \leq 60°$ and the measurement temperature was set to 27°C (room temperature), and successive measurement was performed at a scanning speed 1.2°/min. As a result, such diffraction diagrams (data) as depicted in FIGS. 3 and 4 were obtained.

Here, FIG. 3 depicts diffraction diagrams obtained by the laboratory X-ray diffraction measurement in the case of the solid electrolytes (lithium ionic conductors) of the examples 2 to 6, 8 and 9 and the comparative example 1. Meanwhile, FIG. 4 depicts diffraction diagrams obtained by the laboratory X-ray diffraction measurement in the case of the solid electrolytes (lithium ionic conductors) of the examples 2 to 6.

As depicted in FIG. 3, where the quenching method was used for the synthesis (examples 2 to 6), diffraction diagrams different from those obtained where the quenching method was not used for the synthesis (examples 8 and 9 and comparative example 1) were obtained.

In particular, a peak indicating a $\beta$ structure was found in the diffraction diagrams of the solid electrolytes (lithium ionic conductors) of the examples 8 and 9 (x = 0.800, 1.000) from among the examples 8 and 9 and the comparative example 1 in which the quenching method was not used for the synthesis . In particular, the solid electrolytes (lithium ionic conductors) of the examples 8 and 9 (x = 0.800, 1.000) indicated a crystal structure in which boron (B) is substituted for part of phosphorus (P) of the $\beta$ structure of $Li_3PS_4$ at a room temperature. It is to be noted that, though not depicted, a peak indicating a $\beta$ structure was found also in the diffraction diagrams of the solid electrolytes (lithium ionic conductors) of the example 1 (x = 0.600) in which the quenching method was used for the synthesis and the example 7 (x = 0.600) in which the quenching method was not used for the synthesis. In particular, the solid electrolytes (lithium ionic conductors) of the examples 1 and 7 (x = 0.600), indicated a crystal structure in which boron (B) is substituted for part of phosphorus (P) of the $\beta$ structure of $Li_3PS_4$ at a room temperature. Further, while the diffraction diagram of the solid electrolyte (lithium ionic conductor) of the comparative example 1 (x = 1.333) indicated a peak of its raw material, it did not indicate a peak indicating a $\gamma$ structure or a $\beta$ structure . In other words, the solid electrolyte (lithium ionic conductor) of the comparative example 1 (x = 1.333) did not have any of a $\gamma$ structure and a $\beta$ structure.

In contrast, in the solid electrolytes (lithium ionic conductors) of the examples 2 to 6 (x = 0.800, 0.900, 1.000, 1.100, 1.333) in which the quenching method was used for the synthesis, a crystal structure different from that described above was obtained.

In particular, in the diffraction diagrams of the solid electrolytes (lithium ionic conductors) of the examples 3 to 5 (x = 0.900, 1.000, 1.100) from among the examples 2 to 6 in which the quenching method was used for the synthesis, peaks indicating a crystal lattice of a monoclinic system (six peaks coupled through a dotted line in FIG. 4) were found. In this manner, the solid electrolytes of the examples 3 to 5 (x = 0.900, 1.000, 1.100) individually had a crystal structure including a crystal lattice of a monoclinic system. In the diffraction diagrams of the solid electrolytes (lithium ionic conductors) of the examples 3 to 5 (x = 0.900, 1.000, 1.100), a diffraction peak was found at $2\theta$ = 18.83 $\pm$ 0.5 deg, 20.60 $\pm$ 0.5 deg, 28.52 $\pm$ 0.5 deg, 29.53 $\pm$ 0.5 deg, 34.09 $\pm$ 0.5 deg and 39.37 $\pm$ 0.5 deg.

In contrast, in the diffraction diagrams of the solid electrolytes (lithium ionic conductors) of the examples 2 and 6 (x = 0.800, 1.333), a peak indicating a crystal lattice of a monoclinic system was not found, but a peak indicating a crystal lattice of an orthorhombic system was found. In particular, the solid electrolytes (lithium ionic conductors) of the examples 2 and 6 (x = 0.800, 1.333) individually had a crystal structure that does not include a crystal lattice of a monoclinic system, namely, a crystal structure that includes a crystal lattice of an orthorhombic system. It is to be noted that also the solid electrolytes (lithium ionic conductors) of the examples 1 and 7 to 9 (x = 0.600, 0.800, 1.000) individually had a crystal structure that includes a crystal lattice of an orthorhombic system.

In this manner, while the solid electrolytes (lithium ionic conductors) of the examples 3 to 5 synthesized by the quenching method individually had a crystal structure that includes a crystal lattice of a monoclinic system, the solid electrolytes (lithium ionic conductors) of the examples 1, 2 and 6 to 9 individually had a crystal structure that includes a crystal lattice of an orthorhombic system. The composition of the solid electrolytes (lithium ionic conductors) having the crystal structure including a crystal lattice of a monoclinic system is represented by $Li_{3+3/4x}B_xP_{1-3/4x}S_4$ ($0.9 \leq x \leq 1.1$) on the basis of the powder X-ray diffraction data depicted in FIG. 4.

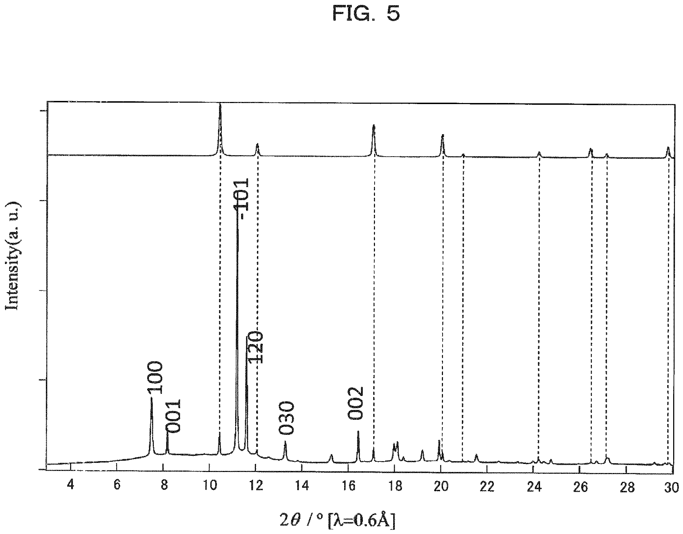

Next, in the synchrotron X-ray diffraction measurement, the synchrotron radiation facilities SPring-8 and beam line BL19B2 was used, the wavelength was set to 0.6 Å and the measurement temperature range was set to -180°C to 300°C, and measurement was performed for the solid electrolyte (lithium ionic conductor) of the example 4 (x = 1.000) and such a diffraction diagram (diffraction data) as depicted in FIG. 5 was obtained. It is to be noted that data of $Li_2S$ that was the raw material is depicted at the upper side in FIG. 5.

Here, six peaks other than a peak corresponding to the peak of $Li_2S$ of the raw material indicated by a dotted line in FIG. 5 were extracted. It is to be noted that the six peaks correspond to six peaks coupled through a dotted line in FIG. 4. Then, as depicted in FIG. 5, an index is allocated to each of the six peaks to calculate a lattice constant using calculation software for index allocation named DICVOL06.

As a result, as depicted in FIG. 6, the solid electrolyte (lithium ionic conductor) of the example 4 (x = 1.000) indicated that the lengths a, b and c of the axes of a unit lattice were 4.569 Å, 7.777 Å and 4.19 Å, respectively; the angles $\alpha$, $\beta$ and $\gamma$ between ridge lines were 90°, 90.70° and 90°, respectively; and the volume V was 148.9 $Å^3$. In this manner, the solid electrolyte (lithium ionic conductor) of the example 4 (x = 1.000) had a crystal structure including a crystal lattice in which the relationship of the lengths a, b and c of the axes of a unit lattice satisfied a ≠ b ≠ c and the relationship of the angles $\alpha$, $\beta$ and $\gamma$ between ridge lines satisfied $\alpha$, $\gamma$ = 90° and $\beta$ ≠ 90°. In other words, the solid electrolyte (lithium ionic conductor) of the example 4 (x = 1.000) had a crystal structure including a crystal lattice of a monoclinic system.

Similarly, the radiation X-ray diffraction measurement was performed also for the solid electrolytes (lithium ionic conductors) of the examples 3 and 5 (x = 0.900, 1.100) to obtain diffraction diagrams. Thus, six peaks were extracted, and a lattice constant was calculated.

As a result, as depicted in FIG. 6, the solid electrolyte (lithium ionic conductor) of the example 3 (x = 0.900) indicated that the lengths a, b and c of the axes of a unit lattice were 4.583 Å, 7.794 Å and 4.222 Å, respectively; the angles $\alpha$, $\beta$ and $\gamma$ between ridge lines were 90°, 90.07° and 90°, respectively; and the volume was V 150.8 $Å^3$. In this manner, the solid electrolyte (lithium ionic conductor) of the example 3 (x = 0.900) had a crystal structure including a crystal lattice in which the relationship of the lengths a, b and c of the axes of a unit lattice satisfied a ≠ b ≠ c and the relationship of the angles $\alpha$, $\beta$ and $\gamma$ between ridge lines satisfied $\alpha$, $\gamma$ = 90° and $\beta$ ≠ 90°. In other words, the solid electrolyte (lithium ionic conductor) of the example 3 (x = 0.900) had a crystal structure including a crystal lattice of a monoclinic system.

Meanwhile, the solid electrolyte (lithium ionic conductor) of the example 5 (x = 1.100) exhibited that the lengths a, b and c of the axes of a unit lattice were 4.512 Å, 7.733 Å and 4.102 Å, respectively; the angles $\alpha$, $\beta$ and $\gamma$ between ridge lines were 90°, 90.70° and 90°, respectively; and the volume V was 143.1$Å^3$. In this manner, the solid electrolyte (lithium ionic conductor) of the example 5 (x = 1.100) had a crystal structure including a crystal lattice in which the relationship of the lengths a, b and c of the axes of a unit lattice satisfied a ≠ b ≠ c and the relationship of the angles $\alpha$, $\beta$ and $\gamma$ between ridge lines satisfied $\alpha$, $\gamma$ = 90° and $\beta$ ≠ 90°. In other words, the solid electrolyte (lithium ionic conductor) of the example 5 (x = 1.100) had a crystal structure including a crystal lattice of a monoclinic system.

In this manner, the solid electrolytes (lithium ionic conductors) of the examples 3 to 5 (x = 0.900, 1.000, 1.100) indicated that the lengths a, b and c of the axes of a unit lattice were approximately 4.51 to approximately 4.58 Å, approximately 7.73 to approximately 7.79 Å and approximately 4.10 to approximately 4.22 Å, respectively; the angles $\alpha$, $\beta$ and $\gamma$ between ridge lines were 90°, approximately 90.1° to approximately 90.7° and 90°, respectively; and the volume V was approximately 143 to 151 $Å^3$. In this manner, the solid electrolytes (lithium ionic conductors) of the examples 3 to 5 (x = 0.900, 1.000, 1.100) had a crystal structure including a crystal lattice in which the relationship of the lengths a, b and c of the axes of a unit lattice satisfied a ≠ b ≠ c and the relationship of the angles $\alpha$, $\beta$ and $\gamma$ between ridge lines satisfied $\alpha$, $\gamma$ = 90° and $\beta$ ≠ 90°. In other words, the solid electrolytes (lithium ionic conductors) of the examples 3 to 5 (x = 0.900, 1.000, 1.100) individually had a crystal structure including a crystal lattice of a monoclinic system and individually had a composition represented by $Li_{3+3/4x}B_xP_{1-3/4x}S_4$ (0.9 ≤ x ≤ 1.1) .

In contrast, the solid electrolyte (lithium ionic conductor) of the example 6 (x = 1.333) indicated that the lengths a, b and c of the axes of a unit lattice were 8.144 Å, 10.063 Å and 6.161 Å, respectively; the angles $\alpha$, $\beta$ and $\gamma$ between ridge lines were 90°, 90° and 90°, respectively; and the volume V was 504. 9$Å^3$. In this manner, the solid electrolyte (lithium ionic conductor) of the example 6 (x = 1.333) had a crystal structure including a crystal lattice in which a relationship of the lengths a, b and c of the axes of a unit lattice satisfied a ≠ b ≠ c and the relationship of the angles $\alpha$, $\beta$ and $\gamma$ between ridge lines satisfied $\alpha$, $\beta$ and $\gamma$ = 90°. In other words, the solid electrolyte (lithium ionic conductor) of the example 6 (x = 1.333) had a crystal structure including a crystal lattice of an orthorhombic system.

Next, in the infrared spectrometry, measurement was performed for the solid electrolyte (lithium ionic conductor) of the example 4 (x = 1.000) using a Fourier Transform Infrared Spectrometer (FT-IR), and such spectrum data as depicted in FIG. 7 was obtained. It is to be noted that also spectrum data of $Li_3BS_3$ and $Li_3PS_4$ are depicted in FIG. 7. Here, the Nocolet8700 Fourier transform infrared spectrometer of Thermoelectron was used as an apparatus, and the resolution was set to 4 $cm^{-1}$; and the integration time period was set to 256 times (5 minutes), and a KBr pellet method was used as a measurement method.

As depicted in FIG. 7, peaks indicating $BS_3$, $BS_4$ and $PS_4$ were found in the spectrum data of the solid electrolyte (lithium ionic conductor) of the example 4 (x=1.000). Inparticular, the solid electrolyte (lithium ionic conductor) of the example 4 (x = 1.000) had a crystal structure including a skeleton of a three-coordinated planar body ($BS_3$ planar body) centering on boron (B), a four-coordinated tetrahedron ($BS_4$ tetrahedron) centering on boron (B) and another four-coordinated tetrahedron ($PS_4$ tetrahedron) centering on phosphorus (P).

Further, when the infrared spectrometry was performed similarly also for the solid electrolytes (lithium ionic conductors) of the examples 3 and 5 (x = 0.900, 1.100) to obtain spectrum data, peaks indicating $BS_3$, $BS_4$ and $PS_4$ were found similarly. In other words, also the solid electrolytes (lithium ionic conductors) of the examples 3 and 5 (x = 0.900, 1.100) individually had a crystal structure including a skeleton of a three-coordinated planar body ($BS_3$ planar

body) centering on boron (B), a four-coordinated tetrahedron ($BS_4$ tetrahedron) centering on boron (B) and another four-coordinated tetrahedron ($PS_4$ tetrahedron) centering on phosphorus (P).

In this manner, the solid electrolytes (lithium ionic conductors) of the examples 3 to 5 (x = 0.900, 1.000, 1.100) individually had a crystal structure including a skeleton of a three-coordinated planar body ($BS_3$ planar body) centering on boron (B), a four-coordinated tetrahedron ($BS_4$ tetrahedron) centering on boron (B) and another four-coordinated tetrahedron ($PS_4$ tetrahedron) centering on phosphorus (P).

Then, ionic conductivity measurement was performed to evaluate the ionic conductivity of the solid electrolytes (lithium ionic conductors) of the examples 1 to 9 and the comparative examples 1 and 2 obtained in such a manner as described above.

The valuation of the ionic conductivity was performed using an alternating current impedance method.

In particular, the solid electrolytes (lithium ionic conductors) of the examples 1 to 9 and the comparative examples 1 and 2 described above were individually attached to an electrochemical cell having a jig [here, the upper side thereof is an electrode terminal (+) and the lower side thereof was an electrode terminal (-)] of 10 mm$\varphi$ for which SKD11 was used as a material and AUTOLAB FRA (frequency response analysis apparatus) of Metrohm Autolab was used as an evaluation apparatus. Further, the application voltage was set to 0.1 V; the frequency response region was set to 1 MHz to 1 Hz; and the measurement temperature was set to 27°C (room temperature), and then the impedance was measured.

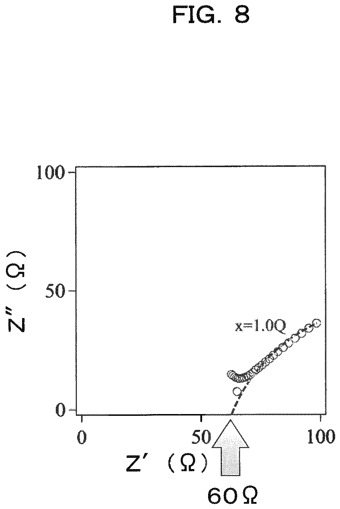

Then, as depicted in FIG. 8, one circular arc was extrapolated to measured data of the impedance and the ionic conductivity was calculated taking an crossing point between the right end and the Z' axis as grain boundary resistance. Here, the thickness of the solid electrolyte (lithium ionic conductor) was set to t (cm); the area (electrode area) of the jig used for the measurement was set to S ($cm^2$); and the resistance value of the grain boundary resistance was set to R ($\Omega$), and the ionic conductivity o (S/cm) was calculated in accordance with the following expression.

$$\texttt{t (cm)/R (}\Omega\texttt{)/S (cm}^2\texttt{) = }\sigma\texttt{ (1/}\Omega\cdot\texttt{cm) = }\sigma\texttt{ (S/cm)}$$

For example, in the case of the example 4 (X = 1.000), $\sigma = 1.2 \times 10^{-3}$ S/cm was calculated using t = 0.06 cm, R = 60 $\Omega$ and S = 0.785 $cm^2$.

Here, FIG. 9 depicts ionic conductivity data of the solid electrolytes (lithium ionic conductors) of the examples 1 to 9 described above at a room temperature (here, approximately 27°C) in various cases. It is to be noted that the ionic conductivity data of the examples 1 to 6 are plotted using a mark of a triangle and the ionic conductivity data of the examples 7 to 9 are plotted using a mark of a black circle.

As depicted in FIG. 9, the ionic conductivity of the solid electrolyte (lithium ionic conductor) of the example 1 (x = 0.600; quenching method) was $6.9 \times 10^{-4}$ S/cm; the ionic conductivity of the solid electrolyte (lithium ionic conductor) of the example 2 (x = 0.800; quenching method) was $8.8 \times 10^{-6}$ S/cm; the ionic conductivity of the solid electrolyte (lithium ionic conductor) of the example 3 (x = 0.900; quenching method) was $4.0 \times 10^{-4}$ S/cm; the ionic conductivity of the solid electrolyte (lithium ionic conductor) of the example 4 (x = 1.000; quenching method) was $1.2 \times 10^{-3}$ S/cm; the ionic conductivity of the solid electrolyte (lithium ionic conductor) of the example 5 (x = 1.100; quenching method) was $2.0 \times 10^{-6}$ S/cm; the ionic conductivity of the solid electrolyte (lithium ionic conductor) of the example 6 (x = 1.333; quenching method) was $3.1 \times 10^{-6}$ S/cm; the ionic conductivity of the solid electrolyte (lithium ionic conductor) of the example 7 (x = 0.600; natural cooling method) was $7.7 \times 10^{-5}$ S/cm; the ionic conductivity of the solid electrolyte (lithium ionic conductor) of the example 8 (x = 0.800; natural cooling method) was $8.8 \times 10^{-6}$ S/cm; and the ionic conductivity of the solid electrolyte (lithium ionic conductor) of the example 9 (x = 1.000; natural cooling method) was $2.1 \times 10^{-6}$ S/cm.

In contrast, since the solid electrolyte (lithium ionic conductor) of the comparative example 1 (x = 1.333; natural cooling method) did not indicate an ionic conduction, the data of the comparative example 1 are not plotted in FIG. 9. Further, since the ionic conductivity of the solid electrolyte (lithium ionic conductor) of the comparative example 2 (x < 0 .100; natural cooling method) was lower than $10^{-6}$ S/cm, the data of the comparative example 2 are not plotted in FIG. 9. For example, although $Li_3PS_4$ is included in a case in which x is lower than 0.100, the ionic conductivity is lower than $10^{-6}$ S/cm at a room temperature. Further, while $Li_3BS_3$ is included in a case in which x is 1. 333, an ionic conduction is not indicated at a room temperature.

In this manner, the solid electrolytes (lithium ionic conductors) of the examples 1 to 9 indicate high ionic conductivities at a room temperature and indicate improved ionic conduction in comparison with those of the solid electrolytes (lithium ionic conductors) of the comparative examples 1 and 2.

For example, the solid electrolyte (lithium ionic conductor) of the example 4 was fabricated by the quenching method and has a crystal structure including a crystal lattice of a monoclinic system as described above. In contrast, the solid electrolytes (lithium ionic conductors) of the examples 1 and 2 were fabricated by the quenching method and individually have a crystal structure including a crystal lattice of an orthorhombic system, and the solid electrolytes (lithium ionic conductors) of the examples 7 to 9 were fabricated by the natural cooling method and individually have a crystal structure including a crystal lattice of an orthorhombic system. However, the solid electrolytes (lithium ionic conductors) of the examples 1, 2, 4 and 7 to 9 indicated high ionic conductivities and indicated improved ionic conduction in comparison with the solid electrolytes (lithium ionic conductors) of the comparative examples 1 and 2. In this manner, on the basis of the ionic conductivity data (refer to FIG. 9) of the example described above, if the solid electrolyte (lithium ionic conductor) is configured so as to have a composition represented by $Li_{3+3/4x}B_xP_{1-3/4x}S_4$ ($0.6 \leq x \leq 1.1$) irrespective of the crystal structure or the fabrication method, then the ionic conductivity becomes high and the ionic conduction is improved in comparison with those of the solid electrolytes (lithium ionic conductors) of the comparative examples 1 and 2.

Further, while, in the ionic conductivity data (refer to FIG. 9) of the examples described above, ionic conductivity data of the solid electrolytes (lithium ionic conductors) synthesized by the natural cooling method and having compositions represented by $Li_{3+3/4x}B_xP_{1-3/4x}S_4$ ($x = 0.9$) and $Li_{3+3/4x}B_xP_{1-3/4x}S_4$ ($x = 1.1$) are not plotted, the ionic conductivity of the solid electrolyte (lithium ionic conductor) of the example 8 is $8.8 \times 10^{-6}$ S/cm and the ionic conductivity of the solid electrolyte (lithium ionic conductor) of the example 9 is $2.1 \times 10^{-6}$ S/cm, and the ionic conductivity varies linearly within the ranges and can be approximated by a linear line (refer to FIG. 9). Therefore, on the basis of this, the ionic conductivities of the solid electrolytes (lithium ionic conductors) synthesized by the natural cooling method and having compositions represented by $Li_{3+3/4x}B_xP_{1-3/4x}S_4$ ($x = 0.9$) and $Li_{3+3/4x}B_xP_{1-3/4x}S_4$ ($x = 1.1$) are $5.0 \times 10^{-6}$ S/cm and $9.0 \times 10^{-7}$ S/cm, respectively. Further, while the solid electrolytes (lithium ionic conductors) synthesized by the natural cooling method and having a composition represented by $Li_{3+3/4x}B_xP_{1-3/4x}S_4$ ($x = 0.9$) has a crystal structure including a crystal lattice of an orthorhombic system, the solid electrolyte (lithium ionic conductor) of the example 3 was fabricated by the quenching method and has a crystal structure including a crystal lattice of a monoclinic system. However, the solid electrolyte (lithium ionic conductor) synthesized by the natural cooling method and having a composition represented by $Li_{3+3/4x}B_xP_{1-3/4x}S_4$ ($x=0.9$) and the solid electrolyte (lithium ionic conductor) of the example 3 indicate high ionic conductivities and indicate improved ionic conduction in comparison with those of the solid electrolytes (lithium ionic conductors) of the comparative examples 1 and 2. Further, while the solid electrolytes (lithium ionic conductors) synthesized by the natural cooling method and having a composition represented by $Li_{3+3/4x}B_xP_{1-3/4x}S_4$ ($x = 1.1$) have a crystal structure including a crystal lattice of an orthorhombic system, the solid electrolyte (lithium ionic conductor) of the example 5 was fabricated by the quenching method and has a crystal structure including a crystal lattice of a monoclinic system. However, the solid electrolytes (lithium ionic conductors) synthesized by the natural cooling method and having a composition represented by $Li_{3+3/4x}B_xP_{1-3/4x}S_4$ ($x = 1.1$) and the solid electrolyte (lithium ionic conductor) of the example 5 indicate high ionic conductivities and indicate improved ionic conduction in comparison with those of the solid electrolytes (lithium ionic conductors) of the comparative examples 1 and 2. Accordingly, if the solid electrolyte (lithium ionic conductor) is configured so as to have a composition represented by $Li_{3+3/4x}B_xP_{1-3/4x}S_4$ ($0.6 \leq x \leq 1.1$) irrespective of the crystal structure or the fabrication method, then the ionic conductivity becomes high and the ionic conduction is improved in comparison with those of the solid electrolytes (lithium ionic conductors) of the comparative examples 1 and 2.

Especially, the example 4 ($x = 1.000$; quenching method) has a very high ionic conductivity exceeding $10^{-3}$ S/cm. In particular, by using the quenching method as in the example 4 ($x = 1.000$), the ionic conductivity is increased significantly and the ionic conduction is improved significantly in comparison with the example 9 ($x = 1.000$) in which the natural cooling method is used. Further, if the solid electrolyte is configured so as to have a crystal structure including a crystal lattice of a monoclinic system and have a composition represented by $Li_{3+3/4x}B_xP_{1-3/4x}S_4$ ($x = 1.0$) as in the example 4 ($x = 1.000$), then the ionic conductivity is increased significantly and the ionic conduction is improved significantly.

Further, the solid electrolyte (lithium ionic conductor) of the example 3 ($x = 0.900$; quenching method) has a high ionic conductivity exceeding $10^{-4}$ S/cm. In particular, by configuring the solid electrolyte (lithium ionic conductor) so as to have a crystal structure including a crystal lattice of a monoclinic system and have a composition represented by $Li_{3+3/4x}B_xP_{1-3/4x}S_4$ ($x = 0.9$), a solid electrolyte having a high ionic conductivity exceeding $10^{-4}$ S/cm can be implemented. Further, the solid electrolyte (lithium ionic conductor) of the example 4 ($x = 1.000$; quenching method) has a very high ionic conductivity exceeding $10^{-3}$ S/cm. In particular, by configuring the solid electrolyte (lithium ionic conductor) so as to have a crystal structure including a crystal lattice of a monoclinic system and have a composition represented by $Li_{3+3/4x}B_xP_{1-3/4x}S_4$ ($x = 1.0$), a solid electrolyte having a very high ionic conductivity exceeding $10^{-3}$ S/cm can be implemented. In this manner, from among the solid electrolytes (lithium ionic conductors) of the examples 2 to 6 in which the quenching method was used, the solid electrolytes (lithium ionic conductors) of the example 3 ($x = 0.900$; quenching method) and the example 4 ($x = 1.000$; quenching method) indicate suddenly increased ionic conductivities and indicate suddenly improved ionic conduction in comparison with the solid electrolyte (lithium ionic conductor) of the example 2 ($x = 0.800$; quenching method), the solid electrolytes (lithium ionic conductors) of the example 5 ($x = 1.100$; quenching method) and the example 6 ($x = 1.333$; quenching method) . In short, by configuring the solid electrolyte (lithium ionic conductor) so as to have a crystal structure including a crystal lattice of a monoclinic system and have a composition represented by $Li_{3+3/4x}B_xP_{1-3/4x}S_4$ ($0.9 \leq x \leq 1.0$), a remarkable effect can be achieved which has not been achieved by solid electrolytes having a crystal structure including a crystal lattice of an orthorhombic system such as $Li_{3+3/4x}B_xP_{1-3/4x}S_4$ ($x = 0.8$) or $Li_{3+3/4x}B_xP_{1-3/4x}S_4$ ($x = 1.33$; namely, $Li_3BS_3$). It is to be noted that, while the solid electrolyte (lithium ionic conductor) of the example 1, namely, a solid electrolyte having a composition represented by $Li_{3+3/4x}B_xP_{1-3/4x}S_4$ (x = 0.6), has a crystal structure including a crystal lattice of an orthorhombic system, it is expected that, by the synthesis by the quenching method, the ionic conductivity is increased arising from the $\beta$ structure.

Further, the solid electrolytes (lithium ionic conductors) of the example 3 (x = 0.900; quenching method) and the example 4 (x = 1.000; quenching method) indicate significantly increased ionic conductivities and indicate significantly improved ionic conduction in comparison with the solid electrolytes (lithium ionic conductors) of the example 8 (x = 0.800; natural cooling method), the example 9 (x = 1.000 ; natural cooling method), comparative example 1 (x = 1.333; natural cooling method) and comparative example 2 (x < 0.100; natural cooling method). In particular, by configuring the solid electrolyte (lithium ionic conductor) so as to have a crystal structure including a crystal lattice of a monoclinic system and have a composition represented by $Li_{3+3/4x}B_xP_{1-3/4x}S_4$ ($0.9 \leq x \leq 1.0$), a remarkable effect can be obtained which has not been achieved by solid electrolytes having, for example, a crystal structure including a crystal lattice of an orthorhombic system such as a $\beta$ structure or a $\gamma$ structure of $Li_3PS_4$, boron (B) is substituted for part of phosphorus (P) of a $\beta$ structure or a $\gamma$ structure of $Li_3PS_4$, or $Li_{3+3/4x}B_xP_{1-3/4x}S_4$ (x = 0.8) or $Li_{3+3/4x}B_xP_{1-3/4x}S_4$ (x = 1.33; namely, $Li_3BS_3$).

Further, as described above, the solid electrolytes (lithium ionic conductors) of the examples 1 to 6 in which the quenching method was used indicate increased ionic conductivities and indicate improved ionic conduction in comparison with the solid electrolytes (lithium ionic conductors) of the examples 7 to 9 and comparative examples 1 and 2 in which the natural cooling method was used. Especially, while the solid electrolyte (lithium ionic conductor) of the comparative example 1 (x = 1.333) in which the natural cooling method was used did not achieve a desired crystal structure and indicated no ionic conduction, the solid electrolyte (lithium ionic conductor) of the example 6 (x = 1.333) in which the quenching method was used has a high ionic conductivity. Further, the solid electrolyte (lithium ionic conductor) of the example 1 (x = 0.600) in which the quenching method was used indicates a significantly improved ionic conductivity in comparison with that of the solid electrolyte (lithium ionic conductor) of the example 7 (x = 0.600) in which the natural cooling method was used. In this manner, where a solid electrolyte (lithium ionic conductor) is fabricated by the quenching method, by configuring the solid electrolyte so as to have a composition represented by $Li_{3+3/4x}B_xP_{1-3/4x}S_4$ ($0.6 \leq x \leq 1.33$), the ionic conductivity becomes high and the ionic conduction is improved in comparison with the solid electrolyte fabricated by the natural cooling method or $Li_3PS_4$.

[Fabrication Method for All-Solid Lithium Secondary Battery]

First, $LiCoO_2$ and a solid electrolyte material (here, that of the example 4) synthesized in such a manner as described above were mixed at a ratio of 6:4 to produce the positive electrode 1.

Then, Li-Al and a solid electrolyte material (here, that of the example 4) synthesized in such a manner as described above were mixed at a ratio of 7:3 to produce the negative electrode 2.

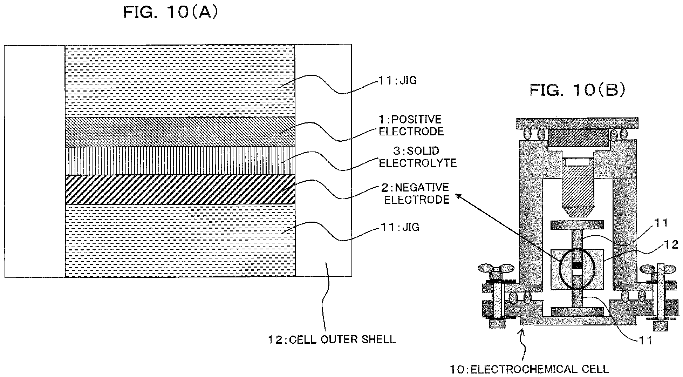

Then, as depicted in FIGS. 10(A) and 10(B), the negative electrode 2, solid electrolyte (here, that of the example 4) 3 and positive electrode 1 were stacked in order in a space between jigs 11 of 10 mm$\varphi$ provided in the electrochemical cell 10 and then pressurized to produce an all-solid lithium secondary battery. It is to be noted that reference numeral 12 in FIGS. 10 (A) and 10 (B) denotes a cell (cell outer shell).

[Evaluation of All-Solid Lithium Secondary Battery]

Charge and discharge evaluation of the all-solid lithium secondary battery produced in such a manner as described above was performed.

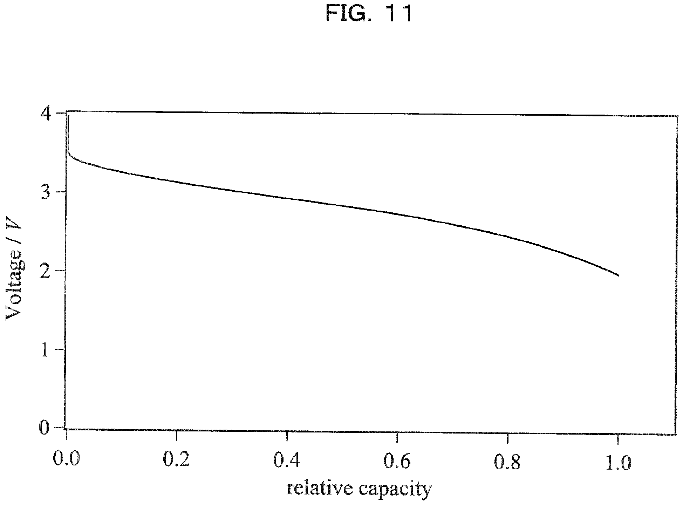

With the all-solid lithium secondary battery produced in such a manner as described above, namely, with an all-solid lithium secondary battery including the solid electrolyte (here, of the example 4) 3 synthesized in such a manner as described above, battery operation at a room temperature was confirmed successfully and such a discharge curve as depicted in FIG. 11 was obtained. Consequently, a good load characteristic (output characteristic) was obtained.

In contrast, when an all-solid lithium secondary battery including a solid electrolyte formed from $Li_3PS_4$ (comparative example 2) or $Li_3BS_3$ (comparative example 1) was produced and charge and discharge evaluation was performed, the all-solid lithium secondary battery did not operate. In other words, the all-solid lithium secondary battery including a solid electrolyte formed from $Li_3PS_4$ or $Li_3BS_3$ did not operate as a battery because the internal resistance is excessively high. Consequently, a discharge curve was not obtained.

REFERENCE SIGNS LIST

1    positive electrode
2    negative electrode

3     solid electrolyte (lithium ionic conductor)
4     positive electrode collector
5     negative electrode collector
10    electrochemical cell
11    jig
12    cell

**Claims**

1. A lithium ionic conductor, comprising lithium (Li), phosphorus (P), boron (B) and sulfur (S) as constituent elements and comprising a crystal structure including a crystal lattice of a monoclinic system.

2. The lithium ionic conductor according to claim 1, wherein the lithium ionic conductor has a composition represented by $Li_{3+3/4x}B_xP_{1-3/4x}S_4$ $(0.9 \leq x \leq 1.1)$ .

3. The lithium ionic conductor according to claim 1 or 2, wherein the lithium ionic conductor has, in an X-ray diffraction $(CuK\alpha_1: \lambda = 1.5405 \text{ Å})$, a diffraction peak at $2\theta = 18.83 \pm 0.5$ deg, $20.60 \pm 0.5$ deg, $28.52 \pm 0.5$ deg, $29.53 \pm 0.5$ deg, $34.09 \pm 0.5$ deg and $39.37 \pm 0.5$ deg.

4. The lithium ionic conductor according to any one of claims 1 to 3, wherein the lithium ionic conductor has a crystal structure including a skeleton of a three-coordinated planar body centering on boron (B), a four-coordinated tetrahedron centering on boron (B) and another four-coordinated tetrahedron centering on phosphorus (P).

5. An all-solid lithium secondary battery, comprising:

   a positive electrode;
   a negative electrode; and
   a solid electrolyte that is provided between the positive electrode and the negative electrode, contains lithium (Li), phosphorus (P), boron (B) and sulfur (S) as constituent elements and has a crystal structure including a crystal lattice of a monoclinic system.

6. The all-solid lithium secondary battery according to claim 5, wherein the solid electrolyte has a composition represented by $Li_{3+3/4x}B_xP_{1-3/4x}S_4$ $(0.9 \leq x \leq 1.1)$ .

7. The all-solid lithium secondary battery according to claim 5 or 6, wherein the solid electrolyte has, in an X-ray diffraction $(CuK\alpha_1: \lambda = 1.5405 \text{ Å})$, a diffraction peak at $2\theta = 18.83 \pm 0.5$ deg, $20.60 \pm 0.5$ deg, $28.52 \pm 0.5$ deg, $29.53 \pm 0.5$ deg, $34.09 \pm 0.5$ deg and $39.37 \pm 0.5$ deg.

8. The all-solid lithium secondary battery according to any one of claims 5 to 7, wherein the solid electrolyte has a crystal structure including a skeleton of a three-coordinated planar body centering on boron (B), a four-coordinated tetrahedron centering on boron (B) and another four-coordinated tetrahedron centering on phosphorus (P).

9. A fabrication method for a lithium ionic conductor, comprising mixing lithium (Li), phosphorus (P), boron (B) and sulfur (S), melting the mixture by heating, and quenching the melted mixture to fabricate a solid electrolyte having a crystal structure including a crystal lattice of a monoclinic system.

10. The fabrication method for a lithium ionic conductor according to claim 9, wherein the solid electrolyte has a composition represented by $Li_{3+3/4x}B_xP_{1-3/4x}S_4$ $(0.9 \leq x \leq 1.1)$.

11. The fabrication method for a lithium ionic conductor according to claim 9 or 10, wherein the solid electrolyte has, in an X-ray diffraction $(CuK\alpha_1: \lambda = 1.5405 \text{ Å})$, a diffraction peak at $2\theta = 18.83 \pm 0.5$ deg, $20.60 \pm 0.5$ deg, $28.52 \pm 0.5$ deg, $29.53 \pm 0.5$ deg, $34.09 \pm 0.5$ deg and $39.37 \pm 0.5$ deg.

12. The fabrication method for a lithium ionic conductor according to any one of claims 9 to 11, wherein the solid electrolyte has a crystal structure including a skeleton of a three-coordinated planar body centering on boron (B), a four-coordinated tetrahedron centering on boron (B) and another four-coordinated tetrahedron centering on phosphorus (P).

**Patentansprüche**

1.  Lithium-Ionen-Leiter, der Lithium (Li), Phosphor (P), Bor (B) und Schwefel (S) als Elementbestandteile umfasst und eine Kristallstruktur mit einem Kristallgitter eines monoklinen Systems umfasst.

2.  Lithium-Ionen-Leiter nach Anspruch 1, wobei der Lithium-Ionen-Leiter eine Zusammensetzung aufweist, die durch $Li_{3+3/4x}B_xP_{1-3/4x}S_4$ ($0,9 \leq x \leq 1,1$) dargestellt wird.

3.  Lithium-Ionen-Leiter nach Anspruch 1 oder 2, wobei der Lithium-Ionen-Leiter bei einer Röntgenbeugung ($CuK\alpha_1$: $\lambda = 1,5405$ Å) einen Beugungspeak bei $2\theta = 18,83 \pm 0,5$ Grad, $20,60 \pm 0,5$ Grad, $28,52 \pm 0,5$ Grad, $29,53 \pm 0,5$ Grad, $34,09 \pm 0,5$ Grad und $39,37 \pm 0,5$ Grad aufweist.

4.  Lithium-Ionen-Leiter nach einem der Ansprüche 1 bis 3, wobei der Lithium-Ionen-Leiter eine Kristallstruktur mit einem Gerüst aus einem planen Drei-Koordinaten-Körper, der an Bor (B) zentriert ist, einem Vier-Koordinaten-Tetraeder, das an Bor (B) zentriert ist, und einem anderen Vier-Koordinaten-Tetraeder, das an Phosphor (P) zentriert ist, aufweist.

5.  Festkörper-Lithiumsekundärbatterie, umfassend:

    eine positive Elektrode;
    eine negative Elektrode; und
    einen festen Elektrolyten, der zwischen der positiven Elektrode und der negativen Elektrode vorgesehen ist, Lithium (Li), Phosphor (P), Bor (B) und Schwefel (S) als Elementbestandteile enthält und eine Kristallstruktur mit einem Kristallgitter eines monoklinen Systems aufweist.

6.  Festkörper-Lithiumsekundärbatterie nach Anspruch 5, wobei der feste Elektrolyt eine Zusammensetzung aufweist, die durch $Li_{3+3/4x}B_xP_{1-3/4x}S_4$ ($0,9 \leq x \leq 1,1$) dargestellt wird.

7.  Festkörper-Lithiumsekundärbatterie nach Anspruch 5 oder 6, wobei der feste Elektrolyt bei einer Röntgenbeugung ($CuK\alpha_1$: $\lambda = 1,5405$ Å) einen Beugungspeak bei $2\theta = 18,83 \pm 0,5$ Grad, $20,60 \pm 0,5$ Grad, $28,52 \pm 0,5$ Grad, $29,53 \pm 0,5$ Grad, $34,09 \pm 0,5$ Grad und $39,37 \pm 0,5$ Grad aufweist.

8.  Festkörper-Lithiumsekundärbatterie nach einem der Ansprüche 5 bis 7, wobei der feste Elektrolyt eine Kristallstruktur mit einem Gerüst aus einem planen Drei-Koordinaten-Körper, der an Bor (B) zentriert ist, einem Vier-Koordinaten-Tetraeder, das an Bor (B) zentriert ist, und einem anderen Vier-Koordinaten-Tetraeder, das an Phosphor (P) zentriert ist, aufweist.

9.  Herstellungsverfahren für einen Lithium-Ionen-Leiter, das umfasst: Mischen von Lithium (Li), Phosphor (P), Bor (B) und Schwefel (S), Schmelzen des Gemischs durch Erwärmen und Abschrecken des geschmolzenen Gemischs, um einen festen Elektrolyten herzustellen, der eine Kristallstruktur mit einem Kristallgitter eines monoklinen Systems aufweist.

10. Herstellungsverfahren für einen Lithium-Ionen-Leiter nach Anspruch 9, wobei der feste Elektrolyt eine Zusammensetzung aufweist, die durch $Li_{3+3/4x}B_xP_{1-3/4x}S_4$ ($0,9 \leq x \leq 1,1$) dargestellt wird.

11. Herstellungsverfahren für einen Lithium-Ionen-Leiter nach Anspruch 9 oder 10, wobei der feste Elektrolyt bei einer Röntgenbeugung ($CuK\alpha_1$: $\lambda = 1,5405$ Å) einen Beugungspeak bei $2\theta = 18,83 \pm 0,5$ Grad, $20,60 \pm 0,5$ Grad, $28,52 \pm 0,5$ Grad, $29,53 \pm 0,5$ Grad, $34,09 \pm 0,5$ Grad und $39,37 \pm 0,5$ Grad aufweist.

12. Herstellungsverfahren für einen Lithium-Ionen-Leiter nach einem der Ansprüche 9 bis 11, wobei der feste Elektrolyt eine Kristallstruktur mit einem Gerüst aus einem planen Drei-Koordinaten-Körper, der an Bor (B) zentriert ist, einem Vier-Koordinaten-Tetraeder, das an Bor (B) zentriert ist, und einem anderen Vier-Koordinaten-Tetraeder, das an Phosphor (P) zentriert ist, aufweist.

**Revendications**

1.  Conducteur ionique de lithium, comprenant du lithium (Li) , du phosphore (P), du bore (B) et du soufre (S) en tant qu'éléments constitutifs et comprenant une structure cristalline comprenant un réseau cristallin d'un système monoclinique.

2. Conducteur ionique de lithium selon la revendication 1, le conducteur ionique de lithium ayant une composition représentée par $Li_{3+3/4x}B_xP_{1-3/4x}S_4$ (0,9 ≤ x ≤ 1,1).

3. Conducteur ionique de lithium selon la revendication 1 ou 2, le conducteur ionique de lithium ayant, dans un diagramme de diffraction des rayons X ($CuK\alpha_1 : \lambda = 1,5405$ Å) , un pic de diffraction à $2\theta = 18,83 \pm 0,5$ deg, $20,60 \pm 0,5$ deg, $28,52 \pm 0,5$ deg, $29,53 \pm 0,5$ deg, $34,09 \pm 0,5$ deg et $39,37 \pm 0,5$ deg.

4. Conducteur ionique de lithium selon l'une quelconque des revendications 1 à 3, le conducteur ionique de lithium ayant une structure cristalline comprenant un squelette d'un corps plan à trois coordonnées centré sur le bore (B), un tétraèdre à quatre coordonnées centré sur le bore (B) et un autre tétraèdre à quatre coordonnées centré sur le phosphore (P).

5. Batterie rechargeable au lithium tout solide, comprenant ;
une électrode positive ;
une électrode négative ; et
un électrolyte solide qui est disposé entre l'électrode positive et l'électrode négative, contient du lithium (Li), du phosphore (P) , du bore (B) et du soufre (S) en tant qu'éléments constitutifs et a une structure cristalline comprenant un réseau cristallin d'un système monoclinique.

6. Batterie rechargeable au lithium tout solide selon la revendication 5, dans laquelle l'électrolyte solide a une composition représentée par $Li_{3+3/4x}B_xP_{1-3/4x}S_4$ (0,9 ≤ x ≤ 1,1).

7. Batterie rechargeable au lithium tout solide selon la revendication 5 ou 6, dans laquelle l'électrolyte solide a, dans un diagramme de diffraction des rayons X ($CuK\alpha_1 : À = 1,5405$ Å) , un pic de diffraction à $2\theta = 18,83 \pm 0,5$ deg, $20,60 \pm 0,5$ deg, $28,52 \pm 0,5$ deg, $29,53 \pm 0,5$ deg, $34,09 \pm 0,5$ deg et $39,37 \pm 0,5$ deg.

8. Batterie rechargeable au lithium tout solide selon l'une quelconque des revendications 5 à 7, dans laquelle l'électrolyte solide a une structure cristalline comprenant un squelette d'un corps plan à trois coordonnées centré sur le bore (B), un tétraèdre à quatre coordonnées centré sur le bore (B) et un autre tétraèdre à quatre coordonnées centré sur le phosphore (P).

9. Procédé de fabrication d'un conducteur ionique de lithium, comprenant le mélange de lithium (Li), de phosphore (P), de bore (B) et de soufre (S), la fusion du mélange par chauffage, et l'inactivation du mélange fondu pour fabriquer un électrolyte solide ayant une structure cristalline comprenant un réseau cristallin d'un système monoclinique.

10. Procédé de fabrication d'un conducteur ionique de lithium selon la revendication 9, dans lequel l'électrolyte solide a une composition représentée par $Li_{3+3/4x}B_xP_{1-3/4x}S_4$ (0,9 ≤ x ≤ 1,1).

11. Procédé de fabrication d'un conducteur ionique de lithium selon la revendication 9 ou 10, dans lequel l'électrolyte solide a, dans un diagramme de diffraction des rayons X ($CuK\alpha_1 : \lambda = 1,5405$ Å), un pic de diffraction à $2\theta = 18,83 \pm 0,5$ deg, $20,60 \pm 0,5$ deg, $28,52 \pm 0,5$ deg, $29,53 \pm 0,5$ deg, $34,09 \pm 0,5$ deg et $39,37 \pm 0,5$ deg.

12. Procédé de fabrication d'un conducteur ionique de lithium selon l'une quelconque des revendications 9 à 11, dans lequel l'électrolyte solide a une structure cristalline comprenant un squelette d'un corps plan à trois coordonnées centré sur le bore (B), un tétraèdre à quatre coordonnées centré sur le bore (B) et un autre tétraèdre à quatre coordonnées centré sur le phosphore (P).

FIG. 1

4 : POSITIVE ELECTRODE
   COLLECTOR

1 : POSITIVE ELECTRODE

3 : SOLID ELECTROLYTE

2 : NEGATIVE ELECTRODE

5 : NEGATIVE ELECTRODE
   COLLECTOR

FIG. 2

| B SUBSTITUTION AMOUNT | $Li_2S$ (g) | $P_2S_5$ (g) | B (g) | S (g) |
|---|---|---|---|---|
| $x = 0.6$ | 3.6095 | 2.7818 | 0.2954 | 1.3138 |
| $x = 0.8$ | 3.7965 | 2.0424 | 0.3960 | 1.766 |
| $x = 0.9$ | 3.8900 | 1.6644 | 0.4476 | 1.9960 |
| $x = 1.0$ | 3.9875 | 1.2864 | 0.5006 | 2.2268 |
| $x = 1.1$ | 4.0834 | 0.9043 | 0.5524 | 2.4601 |
| $x = 1.333$ | 4.3142 | - | 0.6774 | 3.0135 |

FIG. 3

FIG. 4

## FIG. 5

FIG. 6

| B SUBSTITUTION AMOUNT | CRYSTAL SYSTEM | $a$ (Å) | $b$ (Å) | $c$ (Å) | $\alpha, \beta, \gamma$ (°) | $V$ (Å³) |
|---|---|---|---|---|---|---|
| $x = 0.9$ | MONOCLINIC SYSTEM | 4.583 | 7.794 | 4.222 | 90.07 | 150.8 |
| $x = 1.0$ | MONOCLINIC SYSTEM | 4.569 | 7.777 | 4.19 | 90.70 | 148.9 |
| $x = 1.1$ | MONOCLINIC SYSTEM | 4.512 | 7.733 | 4.102 | 90.70 | 143.1 |
| $x = 1.33$ | ORTHORHOMBIC SYSTEM | 8.144 | 10.063 | 6.161 | 90 | 504.9 |

FIG. 7

# FIG. 8

FIG. 9

FIG. 10(A)

11:JIG

1:POSITIVE ELECTRODE

3:SOLID ELECTROLYTE

2:NEGATIVE ELECTRODE

11:JIG

12:CELL OUTER SHELL

FIG. 10(B)

11

12

11

10:ELECTROCHEMICAL CELL

## FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003022707 A
- JP 2003068361 A
- JP 2009193803 A
- JP 2011068618 W

### Non-patent literature cited in the description

- **RYOJI KANNO et al.** Lithium Ionic Conductor Thio-LISICON. *Journal of The Electrochemical Society,* 2001, vol. 148 (7), A742-A746
- **M. MENETRIER et al.** Ionic Conduction in B2S3-Li2S-LiI glasses. *Solid State Ionics,* 1992, vol. 53-56, 1208-1213
- **KENJI HOMMA et al.** Crystal Structure and phase transitions of the lithium ionic conductor Li3PS4. *Solid State Ionics,* 2011, vol. 182, 53-58
- **KENJI HOMMA et al.** Crystal structure of High-Temperature Phase of Lithium Ionic Conductor, Li3PS4. *J. Phys. Soc. Jpn.,* 2010, vol. 79, 90-93
- **HOMMA et al.** *Enlarged Lithium-Ions Migration Pathway by Substitution of B3+ for P5+ in Li3PS*